# EUROPÄISCHE PATENTSCHRIFT

(11) **EP 3 560 713 B1**
(45) Veröffentlichungstag und Bekanntmachung des Hinweises auf die Patenterteilung: **07.06.2023**
(21) Anmeldenummer: 18213708.3
(22) Anmeldetag: 18.12.2018
(51) Int. Cl.: B33Y 10/00, B22F 10/00, B22F 12/00, B33Y 70/00, B29C 64/188, B29C 64/165, B29C 71/04, B29C 71/02

(54) **VERFAHREN ZUM AUFBAU VON KUNSTSTOFF-BAUTEILEN**
METHOD FOR CONNECTION OF PLASTIC COMPONENTS
PROCÉDÉ DE MONTAGE DES COMPOSANTS EN MATIÈRE PLASTIQUE

(30) Priorität: 28.04.2018 DE 102018004545
(43) Veröffentlichungstag der Anmeldung: 30.10.2019
(73) Patentinhaber: Additive Elements GmbH, 82152 Planegg - München (DE)
(72) Erfinder: Kramer, Thilo, 80339 München (DE); Günther, Johannes, 82152 Planegg (DE)
(74) Vertreter: 2s-ip Schramm Schneider Bertagnoll Patent- und Rechtsanwälte Part mbB

(56) Entgegenhaltungen:
- EP-B1- 0 431 924
- WO-A1-2018/059912
- DE-A1-102013 018 182
- DE-A1-102013 021 091

## Beschreibung

Zur additiven Herstellung von Objekten sind mehrere 3D-Druck-Verfahren bekannt. Hierbei wird das virtuelle Objekt, dessen Daten entweder von einem Scanner stammen oder mit einem CAD-Programm erstellt werden, im Computer in feine planparallele Schichten zerlegt, deren Daten vom 3D-Drucker verwendet werden, um das reale Objekt schichtweise aufzubauen.

Aus der Druckschrift EP 0 431 924 B1 ist ein für einen 3D-Drucker bekanntes Verfahren gemäß dem Binder-Jetting-Prozess bekannt. Er zählt zu den Pulver-basierten Systemen, die ein Pulver als Grundmaterial und eine Flüssigkeit, die das Pulver verklebt, verwenden.

Der Prozess findet im Allgemeinen bei Raumtemperatur statt. Eine genaue Temperierung, dessen zeitliche und räumliche Homogenität technisch herausfordernd wäre, ist nicht notwendig. Der Druckkopf, welcher die zu verfestigende Bereiche definiert, ist in der Größe beliebig skalierbar. Üblich sind Druckköpfe mit mehreren hundert bis tausend einzeln ansteuerbaren Düsen. Des Weiteren stellt das Pulver den Großteil des Materials dar, das nicht selektiv aufgetragen werden muss.

Diese technischen Vorteile ermöglichen eine hohe Aufbaugeschwindigkeit, die auch bei großen Bauteilen erhalten bleibt. Entsprechend wird der Prozess meist für großvolumige Bauteile verwendet, wie sie für den Metallguss benötigt werden. Entweder wird ein Positiv hergestellt, das durch weitere Umformprozesse zu einer Gussschale überführt wird oder es wird direkt ein Negativ für den Abguss hergestellt.

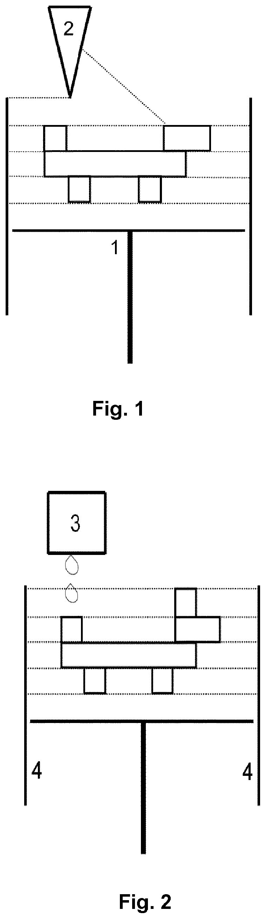

**Fig. 1** zeigt schematisch einen herkömmlichen 3D-Drucker für den Binder-Jetting-Prozess als einen kartesischen Roboter während des Prozessschrittes "Schicht auf legen" und **Fig. 2** entsprechend während des Prozessschrittes "Bedrucken". Er umfasst eine verfahrbare Plattform 1, einen Pulverbeschichter 2, der mit Hilfe von Maschinenachsen verfahren wird, und einen Druckkopf 3 mit einer Dosiervorrichtung für die Flüssigkeit, wobei der Druckkopf mit einem Achsensystem über die vom Pulverbeschichter 2 erzeugte Pulverebene bewegt wird. Um die aufbauende Pulverschüttung zu stützen, können Wände 4 verwendet werden, die dicht an der Plattform 1 anliegen.

Die Plattform 1 mit den Wänden 4 wird oft als wechselbarer Bauraum zusammengefasst, der so konzipiert ist, dass er nach einem vollendeten Bauvorgang vom Rest des 3D-Druckers losgelöst und durch einen neuen leeren Bauraum ersetzt wird.

Der Pulverbeschichter 2 ist über die Breite des Bauraums verfahrbar, dient sowohl als Dosier- als auch als Nivelliervorrichtung für das Pulver und wird regelmäßig aus einem nicht dargestellten Pulvervorratsbehälter nachgefüllt. Die Nivelliervorrichtung ist meist als rotierende Walze oder vibrierende Klinge ausgeführt. Der Pulverbeschichter 2 weist entweder eine kontinuierlich vibrierende Dosiervorrichtung vor der Nivelliervorrichtung auf, oder er wirft Pulver ab seiner Anfangsposition aus.

Der Druckkopf 3 besteht aus einem oder mehreren Druckmodulen, der nach dem Dot-On-Demand Prinzip funktioniert. Jedes Modul beinhaltet mehrere hundert bis tausend Düsen, die positionsgesteuert Tropfen auswerfen. Durch Kombination und Lage der Druckmodule im Druckkopf kann eine entsprechende Druckauflösung und -breite realisiert werden. Versorgungsschläuche leiten die Druckflüssigkeit zum Druckkopf, der auch selbst einen Tank zur Regelung des benötigten Flüssigkeitsdrucks beinhalten kann.

Bevor mit dem eigentlichen Bauprozess begonnen wird, wird die Plattform 1 mit Pulver bedeckt und mit dem Pulverbeschichter 2 nivelliert.

Der Bauprozess selber wiederholt rekursiv, d.h. zyklisch die Vorgänge "Plattform senken", "Schicht auflegen" und "Bedrucken":
Plattform senken: Die Plattform 1 wird um die Schichtstärke gesenkt, wie sie zuvor beim Zerlegen des virtuellen Bauteils definiert wurde.

Schicht auflegen: Der Pulverbeschichter 2 fährt über das Baufeld und verfüllt dabei die entstandene Senke mit Pulver. Zugleich nivelliert er das Pulver, damit wieder eine ebene Pulverfläche entsteht.

Bedrucken: Der Druckkopf 3 fährt das Baufeld streifenweise ab und bedruckt selektiv die Pulverebene dort mit Flüssigkeit, wo sich nach Berechnung das Bauteil mit der aktuellen Bauebene schneidet.

Der Bauraum ist nun mit Pulver angefüllt, das teilweise mit Flüssigkeit befeuchtet wurde. Nach einer Verfestigungszeit werden das lose Pulver und das Bauteil aus dem Bauraum entnommen. Das Bauteil wird danach gesäubert. Das restliche Pulver kann je nach Verfahren wiederverwendet werden.

Grundsätzlich erhält man aus dem 3D-Drucker poröse Bauteile, da lediglich eine Pulverschüttung benetzt und dadurch verklebt wird. Die Bauteile besitzen eine Festigkeit, die für anschließende Prozessschritte ausreicht, jedoch immer noch gering ist. Die Oberflächenqualität entspricht der Rauhigkeit der Pulverkörner. Der Verzug bzw. die Schwindung und damit die Maßhaltigkeit liegen in einem Toleranzbereich, der für den häufigsten Anwendungsbereich, dem Metallguss, gefordert wird.

Selten kann ein Bauteil, so wie es im 3D-Drucker entsteht, direkt verwendet werden. Das Bauteil muss üblicherweise noch getrocknet werden. Für die Verwendung als Positiv für den Metallguss wird es anschließend zusätzlich mit Wachs getränkt bzw. überzogen, um eine wasserdichte Oberfläche zu erzeugen. Für die Verwendung ohne Umformungsvorgang wird das poröse Bauteil mit einem selbsthärtenden Material getränkt, um eine höhere Festigkeit zu erhalten.

Die Hauptvorteile des Binder-Jetting-Prozesses, nämlich Bauteilgröße, Produktivität und Wirtschaftlichkeit, können gegenüber anderen additiven Fertigungsverfahren bei der Herstellung von Kunststoffmodellen weitgehend nicht ausgeschöpft werden, da die Bauteile zur direkten Verwendung nicht fest genug sind. Dies deshalb, weil mit der Verfestigung des Bauteils eine Schwindung verbunden ist, die zudem durch den schichtweisen Aufbau im Bauteil nicht gleichzeitig, sondern zeitversetzt stattfindet. Zwar könnte durch einen hohen Flüssigkeitseintrag die Festigkeit erhöht werden, jedoch leidet dann durch die erhöhte Schwindung die Maßhaltigkeit der Bauteile, weshalb im Stand der Technik auf einen hohen Flüssigkeitseintrag bewusst verzichtet wird. Zudem kann sich das Bauteil so stark verziehen, dass bereits bei der Herstellung der Prozess gestört wird. Es muss also ein unbefriedigender Kompromiss zwischen der nötigen Maßhaltigkeit und der Festigkeit des gedruckten Bauteils eingegangen werden.

Nachteilig ist auch, dass die Festigkeit beim Entnehmen der Bauteile noch nicht voll ausgeprägt ist. Um ein Verbiegen oder Brechen des Bauteils zu verhindern, müssen sie daher vorsichtig aus dem 3D-Drucker entnommen werden, was die Möglichkeit einer automatischen Entnahme verhindert oder zumindest erschwert.

Eine nachträgliche Infiltration der Bauteile führt zwar zu besseren Festigkeiten des Endprodukts, sie ist jedoch mit einem hohen Nachbehandlungsaufwand, häufig in Handarbeit, verbunden, was die Wirtschaftlichkeit des Verfahrens begrenzt.

Auch die hohe Porosität des Bauteils selbst ist nachtteilig, da das Bauteil dadurch schmutzanfällig ist und Flüssigkeiten leicht ungewollt eindringen können.

Aus der Druckschrift DE 10 2006 038 858 A1 ist ein Verfahren zum schichtweisen Aufbau dreidimensionaler Bauteile mittels 3D-Drucker bekannt, bei dem ein selbstaushärtendes Material verwendet wird. Dieses selbstaushärtende Materialsystem ist ein Bindersystem, das ohne fremde Einwirkung, das heißt ohne Wärmewirkung, ohne Energiezugabe oder sonstiger Einwirkung von außen in einem von dem selbstaushärtenden Material abhängigen Zeitraum aushärtet. Die Aushärtezeit und die Verfestigungsdauer wird dabei nicht beeinflusst, wobei im Zusammenhang mit dem selbstaushärtenden System explizit eine Verfestigungsdauer vorgesehen ist, die ein Vielfaches einer Auftragszeit einer Pulverschicht beträgt.

Die DE 10 2013 021 091 A1 betrifft ein Verfahren, bei dem durch schichtweises Aufbringen von Kunststoffpulver und selektives Bedrucken mit einer polymerisierbaren Flüssigkeit in einem Bauraum eines 3D-Druckers ein Kunststoffbauteil aufgebaut wird und bei dem ein Binder mit Hilfe einer Binderflüssigkeit gelöst wird. Mittels einer gesteuerten Luftströmung, die durch das Baumaterial geführt wird, wird die Binderflüssigkeit schnell abtransportiert.

Der Erfindung liegt die Aufgabe zugrunde, ein Verfahren zum Aufbau von Kunststoff-Bauteilen durch schichtweises Aufbringen von Kunststoffpulver und selektives Drucken mit einer polymerisierbaren Flüssigkeit in einem Bauraum eines 3D-Druckers anzugeben, mit dem Bauteile geschaffen werden können, die die genannten Nachteile herkömmlicher Verfahren und Bauteile nicht aufweisen. Die Bauteile sollen eine hohe Festigkeit insbesondere bereits zum Zeitpunkt der Entnahme der Bauteile aus dem Bauraum und darüber hinaus eine geringe Schwindung aufweisen, die sich erst dann ausbildet, wenn die Teile fertig aufgebaut sind, um dadurch den Verzug auf ein geringes Maß zu halten.

Diese Aufgaben werden erfindungsgemäß dadurch gelöst, dass die Polymerisation der Flüssigkeit aktiv gesteuert wird. Durch die positive, bewusste Steuerung von außen mit der Möglichkeit, auch den zeitlichen Beginn der Polymerisation und/oder deren Verlauf bewusst zu wählen, ist es möglich, Bauteile insbesondere mit dem Binder-Jetting-Prozess zu schaffen, die bereits vor der Entnahme aus dem Kunststoffpulver eine hohe Festigkeit und eine gute Maßhaltigkeit aufweisen. Dafür ist ein nicht oder höchstens geringfügig selbstaushärtendes Material von besonderem Vorteil. Anspruch 1 offenbart das Verfahren gemäß der Erfindung .

Eine bewusste Wahl des Zeitpunkts für den Beginn der Polymerisation macht es möglich, einen Verzug des Bauteils, also die während des Aufbauprozesses durch die Polymerisation verursachte Schwindung, zu vermeiden. Dadurch ergibt sich eine gute Maßhaltigkeit der erstellten Bauteile.

Besonders vorteilhaft ist es, die Polymerisation durch thermische Behandlung oder Einwirkung aktiv zu steuern, beziehungsweise auszulösen. Ein weiterer Vorteil in Zusammenhang mit einer thermischen Behandlung besteht insbesondere auch darin, dass der Polymerisationsumsatz erhöht wird. Restpolymer, welches nicht polymerisieren kann, wird dabei aus dem Bauteil ausgetrieben. Sowohl die Erhöhung des Polymerisationsumsatzes als auch das Austreiben des Restpolymers aus dem Bauteil führt zu einer hohen Festigkeit des Bauteils noch bevor es dem Bauraum entnommen wird und äußere Kräfte beim Entnehmen auftreten. Dadurch ist es auch möglich, die Entnahme des Bauteils aus dem Bauraum zu automatisieren. Die wirtschaftlichen Vorteile des Binder-Jetting-Prozesses können mit dem erfindungsgemäßen Verfahren insbesondere auch bei großen Bauteilen voll ausgeschöpft werden.

Vorzugsweise erfolgt die thermische Behandlung mit am Bauraum vorgesehenen Heizelementen oder der Bauraum wird insgesamt in einen Ofen geschoben.

Gemäß einer weiteren vorteilhaften Ausführungsform der Erfindung wird die Polymerisation durch Bestrahlung, insbesondere durch Wärmestrahlung gesteuert und aktiviert, wobei die Bestrahlung vorzugsweise mit Mikrowellenstrahlung erfolgt. Die Bestrahlung durch Mikrowellen hat den Vorteil, dass diese von den Bauteilen stärker absorbiert wird als vom trockenen Kunststoffpulver, sodass eine schnellere und effizientere Polymerisation und Härtung des Bauteils möglich ist. Bei der Bestrahlung sollte dabei auf eine möglichst homogene Temperaturverteilung über das Bauteil hinweg geachtet werden. Auch eine Überhitzung des Bauteils muss vermieden werden, da dadurch der Kunststoff schmilzt oder verbrennen kann.

Gemäß einer weiteren Ausführungsform der Erfindung erfolgt die aktive Steuerung der Polymerisation der Flüssigkeit durch die Beaufschlagung des Bauraums mit einem aufgewärmten Gas, etwa warme Luft. Vorteilhaft ist es dabei, ein Gas zu verwenden, das eine hohe Wärmekapazität aufweist, um im Vergleich zu Luft oder Stickstoff den Polymerisationsvorgang zu beschleunigen. Die Verwendung eines Inert-Gases, zum Beispiel Stickstoff, ist dann vorteilhaft, wenn die Inhibierung der polymerisierbaren Flüssigkeit durch Sauerstoff reduziert werden soll, sodass eine schnellere Polymerisation mit höherem Umsatz und geringerer Austrocknung erreicht wird. Auch eine Vergilbung der Bauteile kann so im Wesentlichen verhindert werden.

Eine vorteilhafte Ausführungsform der Erfindung besteht darin, die aktive Steuerung der Polymerisation durch ein Reaktivgas zu bewirken, sodass die Polymerisation des Reaktivgases bei Kontakt mit den Bauteilen im Bauraum startet. Auch eine Kombination der genannten Gase ist möglich.

Vorteilhaft ist es, den Bauraum bereits während des Aufbauprozesses zu wärmen. Gemäß einer bevorzugten Ausführungsform der Erfindung wird jedoch die Polymerisation nach Abschluss des Aufbauprozesses und nach Entnahme des Bauraums aus dem 3D-Drucker gesteuert, beziehungsweise aktiviert. Dies ist insbesondere dann von Vorteil, wenn der Bauraum und damit das Bauteil große Abmessungen, beispielsweise ein Durchmesser von 1 m und mehr aufweist. Obgleich der Bauraum auch innerhalb des 3D-Druckers beispielsweise mit darin angebrachten Heizelementen zur gesteuerten Polymerisation der Flüssigkeit ausgestattet sein kann, ist es insbesondere auch vorteilhaft, dass Gas, sei es warme Luft, ein Inert-Gas oder ein Reaktivgas über gasdurchlässige Wände, insbesondere durch einen gasdurchlässigen Boden, etwa einen mit Löchern versehenen Boden, einströmen zu lassen und das Gas durch das Innere des Bauraums zu ziehen. Auf dieser Weise kann die Reaktionszeit des Gases mit der polymerisierbaren Flüssigkeit verringert und die Polymerisierung insgesamt intensiviert werden. Im Falle, dass ein Wärmegas in den Bauraum eingebracht werden wird, ist jedoch darauf zu achten, dass bei der Verwendung von einer polymerisierbaren Flüssigkeit mit hohem Dampfdruck eine zu starke Austrocknung des Bauteils vor der eigentlichen Polymerisierung vermieden wird.

Die Durchlässigkeit der Wände des Bauraums, vorzugsweise des luftdurchlässigen Bodens, ist auch mit Kühlluft beaufschlagbar, die durch den Bauraum gezogen wird und dadurch die Abkühlung des Bauraums und des darin erhaltenen Bauteils nach Abschluss des Polymerisationsvorgangs beschleunigt.

Besonders vorteilhaft ist eine Ausführungsform der Erfindung, bei der wenigstens ein Randbereich des Bauteils zusätzlich mit der polymerisierbaren Flüssigkeit bedruckt wird. Auf dieser Weise wird eine Verflüchtigung der polymeren Flüssigkeit während des Aufbauprozesses und während des Aufwärmvorgangs verhindert oder zumindest beschränkt. Die Flüssigkeitsmenge für die Randbereiche ist zu gering, als dass die Flüssigkeit polymerisiert; sie verdunstet zuvor größtenteils im Luftraum und sättigt diesen. Dadurch wird die Flüchtigkeit der Flüssigkeit in den Bereichen des eigentlichen Bauteils verringert, wodurch die Fertigung filigraner Bauteile erleichtert wird, weil sie an den Oberflächen weniger austrocknen.

Es reicht bereits ein Raumanteil der für die Randbereiche des Bauteils vorgesehenen Flüssigkeit von 0,03 % bei Verwendung von 2-Hydroxyethylmetacrylat- und Polymethylmetacrylat-Pulver aus.

Gemäß einer besonders vorteilhaften Ausführungsform des erfindungsgemäßen Verfahrens wird als polymerisierbare Flüssigkeit ein Methacrylat, insbesondere 2-Hydroxyethylmetacrylat als besonders gut geeignet für den Binder-Jetting-Prozess verwendet. Viele monomere Flüssigkeiten aus dieser chemischen Gruppe weisen geeignete Eigenschaften aus, die mit dem Druckkopf verarbeitet werden können. Besonders vorteilhaft ist es dabei, dass die Polymerisation in einer typischen RaumAtmosphäre stattfinden kann. Gut geeignet ist hierbei insbesondere 2-Hydroxyethylmetacrylat.

Mehr eingebrachte Flüssigkeit führt bei herkömmlichen Kunststoff-Material-Systemen zu mehr und schnellerer Schwindung. Erklärt werden kann dies durch den Lösungsmittel-Charakter des Monomers: Kunststoffpartikel werden aufgeweicht und verlieren ihre ursprüngliche Form, sie gelangen in ungefüllte Lufträume und die Packung des Pulvers erhöht sich. Bei der anschließenden Verdunstung in die poröse Umgebung verliert das Bauteil nochmals Volumen.

Überraschenderweise gilt dieser Zusammenhang nicht mehr für sehr hohe Flüssigkeitsmengen. Die Schwindung ist hier gering. Erklärt werden kann dies dadurch, dass die Verformung der Kunststoffpartikel lediglich eine Volumenumverteilung zwischen Pulver und Flüssigkeit darstellt, da kaum Luftvolumen vorhanden ist. Zudem verdunstet der überwiegende Teil des Monomers nicht, sondern polymerisiert. Die für die Verdunstung zur Verfügung stehende Oberfläche ist deutlich geringer. Besonders ausgeprägt ist dieser Effekt für Monomere mit geringem Dampfdruck. Daher ist es besonders vorteilhaft, eine polymerisierbare Flüssigkeit zu wählen, die bei Zimmertemperatur einen Dampfdruck kleiner als 1 kPa aufweist.

Um ein Objekt mit möglichst homogenem Material zu erhalten, ist es vorteilhaft als Kunststoffpulver ein der polymerisierten Flüssigkeit ähnliches chemisches Material zu verwenden. Dies hat den weiteren Vorteil, dass sich üblicherweise Flüssigkeit und Pulver ineinander lösen, die Viskosität des Gemisches sich erhöht und so mehr Flüssigkeit in das Pulver eingebracht werden kann, ohne dass die Flüssigkeit in die Umgebung migriert. Der Anstieg der Viskosität sollte höchstens so hoch gewählt werden, dass noch ein Schichtverbund entsteht, also die Flüssigkeit mindestens eine Strecke von einer Schichtstärke migriert. Auf der anderen Seite sollte der Viskositätsanstieg vorzugsweise so hoch sein, dass die Migration höchstens eine Strecke von zwei Schichtstärken erreicht.

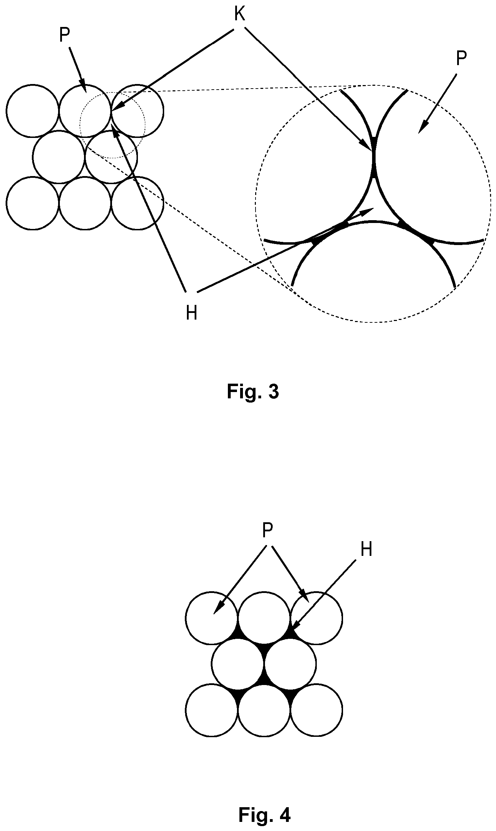

**Fig. 3** zeigt eine Kunststoffpulverschicht bestehend aus mehreren Kunststoffpartikeln P (Kunststoffkugeln), die gemäß einem aus dem Stand der Technik bekannten Binder-Jetting-Verfahren aufgebaut wurde. Ein Ausschnitt der Kunststoffpulverschicht ist vergrößert dargestellt. Wie Eingangs bereits erwähnt, wird im Stand der Technik auf einen hohen Flüssigkeitseintrag bewusst verzichtet. Es wird gerade so viel Flüssigkeit zugeführt, dass die Kunststoffpartikel P an den Kontaktstellen K mit Flüssigkeit benetzt sind, sodass die Kunststoffpartikel P an den Kontaktstellen K aufgrund der einsetzenden Polymerisation aneinanderhaften. Die Hohlräume H zwischen den Kunststoffpartikel P bleiben leer bzw. sind nach dem Aufbau des Objektes mit Luft gefüllt.

**Fig. 4** zeigt demgegenüber eine Kunststoffpulverschicht bestehend aus mehreren Kunststoffpartikeln P (Kunststoffkugeln), die gemäß dem erfindungsgemäßen Binder-Jetting-Verfahren aufgebaut wurde. Im Unterschied zu den aus dem Stand der Technik bekannten Verfahren wird hier so viel Flüssigkeit zugeführt, dass im Bereich des herzustellenden Objektes die Hohlräume H weitgehend mit der Flüssigkeit gefüllt sind. Die in die Hohlräume H eingebrachte Flüssigkeit und die diese Hohlräume H umgebenden Kunststoffpartikel P lösen sich ineinander, sodass sich in diesem Bereich ein Kunststoff-Flüssigkeitsgemisch mit einer Viskosität ergibt, die weitgehend verhindert, dass die Flüssigkeit in die Umgebung migriert, d.h. in benachbarte Hohlräume läuft, in denen kein Flüssigkeitseintrag gewünscht ist.

Werden z.B. Methacrylate verwendet, eignet sich Polymethylmetacrylat-Pulver, das zudem Aufgrund seiner Herstellungsform besonders fließfähig ist, eine hohe Schüttdichte ausbildet und so für den 3D-Druck gut geeignet ist.

Alternativ zu einer polymerisierbaren Flüssigkeit, deren Polymerisation durch Erwärmung ausgelöst werden kann, ist es vorteilhaft, einen Initiator, das heißt einen Radikalstarter für Polymerisationsreaktionen von Vinylmonomeren zu verwenden, der durch Erwärmung aktiviert beziehungsweise ausgelöst wird. Vorteilhaft ist hierbei Dibenzoylperoxid, das bei entsprechender Temperatur in Radikale zerfällt und die Polymerisation startet.

Besonders vorteilhaft ist es dabei, wenn der Initiator dem Pulver bereits untergemischt wurde oder er sich bereits in den Pulverkörnern befindet.

Eine weitere Ausführungsform der Erfindung besteht darin, dass das Mischverhältnis zwischen Kunststoffpulver und polymerisierbarer Flüssigkeit so gewählt wird, dass der Luftraum im Kunststoffpulver im Wesentlichen ausgefüllt wird. Eine Überfüllung sollte vermieden werden, da sonst das Bauteil seine Form schon während des Aufbauprozesses nicht halten kann. Bei der Kombination von 2-Hydroxyethylmetacrylat- und Polymethylmetacrylat-Pulver ist ein Raumverhältnis von 60 % Kunststoffpulver und 20-25 % Flüssigkeit besonders gut geeignet. Ein Peroxidanteil von 0,1 % ist ausreichend.

Der Zerfall des Initiators Dibenzoylperoxid in Radikale erreicht bei einer Temperatur von ca. 60°C eine genügend hohe Zerfallsrate. Der Bauraum muß also nach dem Aufbauprozeß zumindest auf diese Temperatur durchgewärmt werden. Eine zu hohe Temperatur erweicht das Pulver, welches dann nicht mehr wiederverwendet werden kann. Bei der Kombination von 2-Hydroxyethylmethacrylat und Polymethylmethacrylat-Pulver sind ca. 80°C geeignet. Nachdem der Bauraum durchgewärmt worden ist, eignet sich zur Durchpolymerisation und der Eliminierung des Restmonomers in den Bauteilen das Aufrechterhalten der Temperatur während eines Tages. Anschließend wird der Bauraum wieder ausgekühlt, da sonst bei der Entnahme des Bauteils es durch die Temperatur noch flexibel ist.

## Patentansprüche

1. Verfahren zum Aufbau von Kunststoff-Bauteilen durch schichtweises Aufbringen von Kunststoffpulver bestehend aus mehreren Kunststoffpartikeln (P) und selektives Bedrucken mit einer polymerisierbaren Flüssigkeit in einem Bauraum eines 3D-Druckers, wobei eine Kombination aus der polymerisierbaren Flüssigkeit und dem Kunststoffpulver verwendet wird, wobei den Hohlräumen (H) im Bereich des herzustellenden Kunststoff-Bauteils die polymerisierbare Flüssigkeit zugeführt wird sodass im Bereich des herzustellenden Objektes die Hohlräume (H) weitgehend mit der polymerisierbaren Flüssigkeit gefüllt sind und sich die in die Hohlräume (H) eingebrachte polymerisierbare Flüssigkeit und die diese Hohlräume (H) umgebenden Kunststoffpartikel (P) ineinander lösen, sodass sich ein Kunststoff-Flüssigkeitsgemisch mit einer Viskosität ergibt, die verhindert, dass die polymerisierbare Flüssigkeit in die Umgebung migriert, wobei die Polymerisation der polymerisierbaren Flüssigkeit aktiv gesteuert wird.

2. Verfahren nach Anspruch 1, **dadurch gekennzeichnet, dass** die Polymerisation durch thermische Behandlung gesteuert wird.

3. Verfahren nach einem der Ansprüche 1 oder 2, **dadurch gekennzeichnet, dass** die thermische Behandlung mit am Bauraum vorgesehenen Heizelementen gesteuert wird.

4. Verfahren nach einem der vorhergehenden Ansprüche, **dadurch gekennzeichnet, dass** die Polymerisation durch Bestrahlung gesteuert wird, wobei die Bestrahlung vorzugsweise mit Mikrowellenstrahlung erfolgt.

5. Verfahren nach einem der vorhergehenden Ansprüche, **dadurch gekennzeichnet, dass** die Polymerisation mit einem Gas gesteuert wird, wobei das Gas vorzugsweise Luft, ein Inert-Gas oder ein Reaktiv-Gas ist, wobei das Gas vorzugsweise eine hohe Wärmekapazität aufweist.

6. Verfahren nach einem der vorhergehenden Ansprüche, **dadurch gekennzeichnet, dass** die Polymerisation während des Aufbauprozesses gesteuert wird.

7. Verfahren nach einem der vorhergehenden Ansprüche, **dadurch gekennzeichnet, dass** die Polymerisation nach Entnahme des Bauraums aus dem 3D-Drucker gesteuert wird.

8. Verfahren nach einem der vorhergehenden Ansprüche, **dadurch gekennzeichnet, dass**
- der Bauraum über einen luftdurchlässigen Boden mit einem Gas beaufschlagt wird, und/oder
- der Bauraum zu dessen Abkühlung mit Kühlluft beaufschlagt wird.

9. Verfahren nach einem der vorhergehenden Ansprüche, **dadurch gekennzeichnet, dass** Bauteil-nahe Bereiche während des Aufbauprozesses mit der polymerisierbaren Flüssigkeit versehen werden.

10. Verfahren nach einem der vorhergehenden Ansprüche, **dadurch gekennzeichnet, dass** ein nicht bzw. nur geringfügig selbstaushärtendes Material verwendet wird.

11. Verfahren nach einem der vorhergehenden Ansprüche, **dadurch gekennzeichnet, dass**
- ein Methacrylat, insbesondere 2-Hydroxyethylmethacrylat, als polymerisierbare Flüssigkeit verwendet wird, und/oder
- als Kunststoffpulver ein der polymerisierten Flüssigkeit ähnliches chemisches Material, insbesondere Polymethylmethacrylat verwendet wird.

12. Verfahren nach einem der vorhergehenden Ansprüche, **dadurch gekennzeichnet, dass** eine Materialkombination verwendet wird, dessen Polymerisation durch Erwärmung ausgelöst wird.

13. Verfahren nach einem der vorhergehenden Ansprüche, **dadurch gekennzeichnet, dass** ein Initiator für die Polymerisationsreaktion verwendet wird, wobei vorzugsweise Dibenzoylperoxid als Initiator verwendet wird, und wobei vorzugsweise das Kunststoffpulver den Initiator enthält.

14. Verfahren nach einem der vorhergehenden Ansprüche, **dadurch gekennzeichnet, dass** der Dampfdruck der polymerisierbaren Flüssigkeit bei Raumtemperatur kleiner als 1 hPa ist.

## Claims

1. Method for constructing plastics components by depositing plastics powder, consisting of a plurality of plastics particles (P), in layers and selectively printing with a polymerizable liquid in a construction chamber of a 3D printer, wherein a combination of the polymerizable liquid and the plastics powder is used, wherein the polymerizable liquid is fed to the cavities (H) in the region of the plastics component to be produced so that, in the region of the object to be produced, the cavities (H) are largely filled with the polymerizable liquid, and the polymerizable liquid introduced into the cavities (H) and the plastics particles (P) surrounding these cavities (H) dissolve into one another, resulting in a plastics-liquid mixture having a viscosity that prevents the polymerizable liquid from escaping into the environment, wherein the polymerization of the polymerizable liquid is actively controlled.

2. Method according to claim 1, **characterized in that** the polymerization is controlled by heat treatment.

3. Method according to either claim 1 or claim 2, **characterized in that** the heat treatment is controlled using heating elements provided in the construction chamber.

4. Method according to any of the preceding claims, **characterized in that** the polymerization is controlled by irradiation, the irradiation preferably taking place using microwave radiation.

5. Method according to any of the preceding claims, **characterized in that** the polymerization is controlled using a gas, the gas preferably being air, an inert gas or a reactive gas, the gas preferably having a high heat capacity.

6. Method according to any of the preceding claims, **characterized in that** the polymerization is controlled during the construction process.

7. Method according to any of the preceding claims, **characterized in that** the polymerization is controlled after removal of the construction chamber from the 3D printer.

8. Method according to any of the preceding claims, **characterized in that**
- a gas is supplied to the construction chamber via an air-permeable floor, and/or
- cool air is supplied to the construction chamber in order to cool it down.

9. Method according to any of the preceding claims, **characterized in that** regions close to the component are provided with the polymerizable liquid during the construction process.

10. Method according to any of the preceding claims, **characterized in that** a material that is not self-hardening or only slightly self-hardening is used.

11. Method according to any of the preceding claims, **characterized in that**
- a methacrylate, in particular 2-hydroxyethyl methacrylate, is used as the polymerizable liquid, and/or
- a chemical material similar to the polymerized liquid, in particular polymethyl methacrylate, is used as the plastics powder.

12. Method according to any of the preceding claims, **characterized in that** a combination of materials is used, the polymerization of which is triggered by heating.

13. Method according to any of the preceding claims, **characterized in that** an initiator is used for the polymerization reaction, the initiator preferably being dibenzoyl peroxide, and the plastics powder preferably containing the initiator.

14. Method according to any of the preceding claims, **characterized in that** the vapor pressure of the polymerizable liquid at room temperature is less than 1 hPa.

## Revendications

1. Procédé de montage de composants en matière plastique par application en couches de poudre de matière plastique composée de plusieurs particules de matière plastique (P) et impression sélective à l'aide d'un liquide polymérisable dans un espace de montage d'une imprimante 3D, dans lequel une combinaison du liquide polymérisable et de la poudre de matière plastique est utilisée, dans lequel le liquide polymérisable est acheminé vers les cavités (H) dans la zone du composant en matière plastique à fabriquer, de sorte que, dans la zone de l'objet à fabriquer, les cavités (H) sont largement remplies du liquide polymérisable et le liquide polymérisable introduit dans les cavités (H) et les particules de matière plastique (P) entourant lesdites cavités (H) se dissolvent les uns dans les autres, de sorte qu'il en résulte un mélange matière plastique-liquide comportant une viscosité qui empêche le liquide polymérisable de migrer dans l'environnement, dans lequel la polymérisation du liquide polymérisable est contrôlée activement.

2. Procédé selon la revendication 1, **caractérisé en ce que** la polymérisation est contrôlée par traitement thermique.

3. Procédé selon l'une des revendications 1 ou 2, **caractérisé en ce que** le traitement thermique est contrôlé à l'aide d'éléments chauffants prévus au niveau de l'espace de montage.

4. Procédé selon l'une des revendications précédentes, **caractérisé en ce que** la polymérisation est contrôlée par irradiation, dans lequel l'irradiation s'effectue de préférence à l'aide d'un rayonnement micro-ondes.

5. Procédé selon l'une des revendications précédentes, **caractérisé en ce que** la polymérisation est contrôlée par un gaz, dans lequel le gaz est de préférence de l'air, un gaz inerte ou un gaz réactif, dans lequel le gaz présente de préférence une capacité calorifique élevée.

6. Procédé selon l'une des revendications précédentes, **caractérisé en ce que** la polymérisation est contrôlée pendant le processus de montage.

7. Procédé selon l'une des revendications précédentes, **caractérisé en ce que** la polymérisation est contrôlée après le retrait de l'espace de montage de l'imprimante 3D.

8. Procédé selon l'une des revendications précédentes, **caractérisé en ce que**
- l'espace de montage est alimenté en gaz par l'intermédiaire d'un sol perméable à l'air, et/ou
- l'espace de montage est alimenté en air de refroidissement pour son refroidissement.

9. Procédé selon l'une des revendications précédentes, **caractérisé en ce que** des zones proches du composant sont pourvues du liquide polymérisable pendant le processus de montage.

10. Procédé selon l'une des revendications précédentes, **caractérisé en ce qu'**un matériau non ou peu auto-durcissant est utilisé.

11. Procédé selon l'une des revendications précédentes, **caractérisé en ce que**
- un méthacrylate, en particulier du méthacrylate de 2-hydroxyéthyle, est utilisé comme liquide polymérisable, et/ou
- un matériau chimique similaire au liquide polymérisé, en particulier du polyméthacrylate de méthyle, est utilisé comme poudre de matière plastique.

12. Procédé selon l'une des revendications précédentes, **caractérisé en ce qu'**une combinaison de matériaux, dont la polymérisation est déclenchée par chauffage, est utilisée.

13. Procédé selon l'une des revendications précédentes, **caractérisé en ce qu'**un initiateur est utilisé pour la réaction de polymérisation, dans lequel de préférence le peroxyde de dibenzoyle est utilisé comme initiateur, et dans lequel de préférence la poudre de matière plastique contient l'initiateur.

14. Procédé selon l'une des revendications précédentes, **caractérisé en ce que** la pression de vapeur du liquide polymérisable est inférieure à 1 hPa à température ambiante.
